# EUROPEAN PATENT SPECIFICATION

(11) **EP 1 457 087 B1**
(45) Date of publication and mention of the grant of the patent: **24.01.2007**
(21) Application number: 02801190.6
(22) Date of filing: 13.12.2002
(51) Int. Cl.: H04Q 7/38

(54) **MOBILE COMMUNICATION SERVER**
SERVER FÜR MOBILKOMMUNIKATION
SERVEUR DE COMMUNICATION MOBILE

(30) Priority: 17.12.2001 US 341535 P
(43) Date of publication of application: 15.09.2004
(73) Proprietor: Siemens VDO Automotive Corporation, Auburn Hills, MI 48326-2980 (US)
(72) Inventor: JACKSON, David, Eugene, Atkins, IA 52206 (US)
(74) Representative: Kley, Hansjörg
(86) International application number: PCT/IB2002/005826
(87) International publication number: WO 2003/052710

(56) References cited:
- WO-A-96/28947
- US-A- 6 122 514
- US-B1- 6 185 413

## Description

The present invention relates to a control system for a mobile communication system according to the preamble of claim 1.

The invention relates to improvements in two-way communication between mobile vehicles and a home base.

A home base, such as a police station, typically must be in two-way communication with each of several vehicles on the road. Thus, police cars typically have any one of several types of radios which are in two-way communication with the base.

Over the past several years, more and more wireless communication between the vehicles and the base has been occurring. As an example, most police vehicles today have a laptop computer for receiving and processing information, and for sending information to the base. The vehicles are also provided with information such as AVL (automatic vehicle location) information which is sent to the base. Police officers will often enter their reports into their laptop computer and transmit it to the base, rather than waiting until the end of a shift. At a traffic stop, the police officer may query the base with regard to the license plate, the identity of an individual who is stopped, fingerprints could be scanned and sent, etc. The base will often send dispatch instructions to the vehicle over these same wireless connections.

In the past, while a police vehicle may be provided with more than one way of communicating, no analysis of the available means of communication has been made. Vehicle location information has typically been sent over a two-way radio link. However, in the event the vehicle is outside of the radio range, then some other means may be utilized.

As the number of types of communication devices available on a police car increase, and as the types of data and the size of data which is to be transmitted to and from the base from the vehicles increases, it would be desirable to have a controlled program for evaluating available communication options and selecting the best.

The document WO 96/28947 A1 [2] discloses a communications system for the above quoted purpose with a selection, that is a handover from one channel to another channel. The term «channel» includes in this context different type of mobile communication systems like cellular systems such as GSM or satellite systems. The handover is done according to the quality of the existing connection with at least an additional parameter like price, capacity, transmission speed and availability. The communication system according to WO 96/28947 A1 [2] enables a handover of an existing connection.

According to the teachings in US 6,185,413 B1 [3] a Mobile Station is presented, which allows in advance a calculation of the expected charges for a desired connection for a set of applications running on that Mobile Station. Based upon the calculations, the most coest-efficient application for the desired transmission is selected. The technical parameters are stored in a table.

In the document US 6,122,514 [1] another communication system is disclosed a selection of one among a plurality of network channels with channel operating parameter values. When a particular channel does not become available, there is a recovery procedure provided. The channel operating parameters include bandwidth, information transfer costs as well as transfer packet loss rate, latency and jitter.

Each type of two-way radio has an optimum message size. As an example, three known two-way radio systems, RD-LAP, Open Sky, EDACS are optimum for message sizes of 100-1000 bytes. A TDMA network, on the other hand, is optimum for smaller messages of 20-100 bytes. Some available communication systems have a monetary cost that is higher than others. Further, some of the systems may be desirably dedicated for receiving and processing a particular type of message. Thus, an optimum controller might wish to maintain the band width on this type of communication system for one particular type of message.

No known control has been provided which would evaluate a particular message and determine which means of communication would be best for communication of that particular message.

It is an object of the present invention to a provide control system for a mobile communication system which allows the most appropriate selection of channel according to a particular message to be transferred.

This object according to the present invention is achieved by the features given in claim 1.

According to the present invention, a controller is able to evaluate a particular type of message to be sent, and select the optimum means for transmitting that message. The operator of the communication system is able to program a table which evaluates the priority of a particular message, and the available options for transmitting that message. The table will allow the control to select the best communication method given the present usage at the time of the several types of communications available, the monetary cost, the available band width, and the effect on the available band width by the transmission of the particular message. Of course, the operator may utilize any other weighting factors while programming the table. The controller on the police vehicle receives a particular message to be sent from the vehicle. That message is processed through a control algorithm that includes evaluating the priority, and a series of "desired" communication methods for the particular type of message. The instantaneous use of the bandwidth on the most desired means of communication is evaluated. If the particular message could be sent over the most desired, then the most desired is utilized. If not, then the control proceeds to evaluating whether the second most desired use would be available.

These and other features of the present invention can be best understood from the following specification and drawings, the following of which is a brief description.
Figure 1 is a schematic view of a base/mobile communication network.
Figure 2 shows a control table.
Figure 3 is a flowchart of the algorithm.

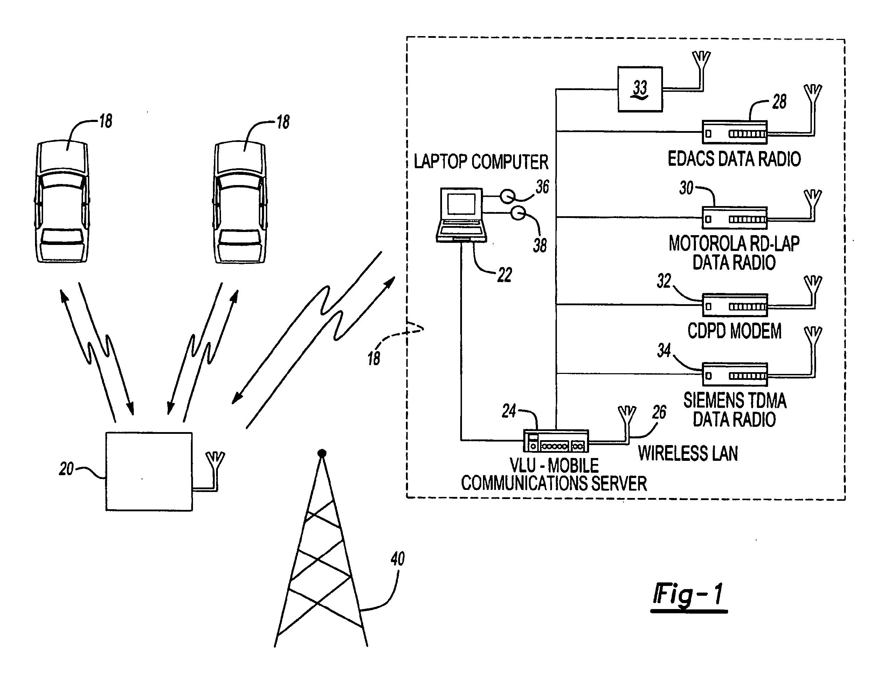

A mobile communication system is illustrated in Figure 1 schematically. As shown, a number of vehicles 18 may represent vehicles, which need to be in two-way communication with a base 20, such as police vehicles. The vehicles 18 can communicate through various types of commercially available two-way radio, CDPD (cellular digital packet data) systems, or wireless LAN networks.

Each of the vehicles typically is provided, as an example, with a laptop computer 22 to enter, process, receive and evaluate information sent to and from and received from base 20. Laptop 22 communicates with a mobile communication server 24. Mobile communication server 24 has a transmitter/receiver 26 for communicating with a wireless LAN network. As is known, the wireless LAN network is optimum for sending large amounts of data, such as field reports. However, the vehicle 18 needs to be in proximity to a local area network receiver such as shown schematically at 40.

The vehicle 18 is shown provided with four other ways of two-way communication with the base 20. It should be understood that this invention would typically relate to any communication system which has at least two types of two-way communication, although several more are illustrated in this figure to show the extreme power of the present invention. Communication system 28 may be an EDACS data radio. Communication system 30 may be an RD-LAP data radio such as is available from Motorola. Communication system 32 may be a CDPD modem. Communication system 34 may be a TDMA data radio such as is available from Siemens VDO Automotive. Communications system 33 may be a proprietary modem from any new source.

As is known, the laptop 22 can receive information to be transmitted to the base such as shown schematically by various input nodes 36. The police officer, or other operator of the vehicle 18, is able to input information such as license plates, scanned fingerprints, etc., for transmission to the base such that the base can report back after an evaluation of the transmitted information. Further, vehicle location information is input such as shown schematically at 38, either into the laptop 22 or directly into the server 24 for transmission to the base. All of this inputting of information is as known.

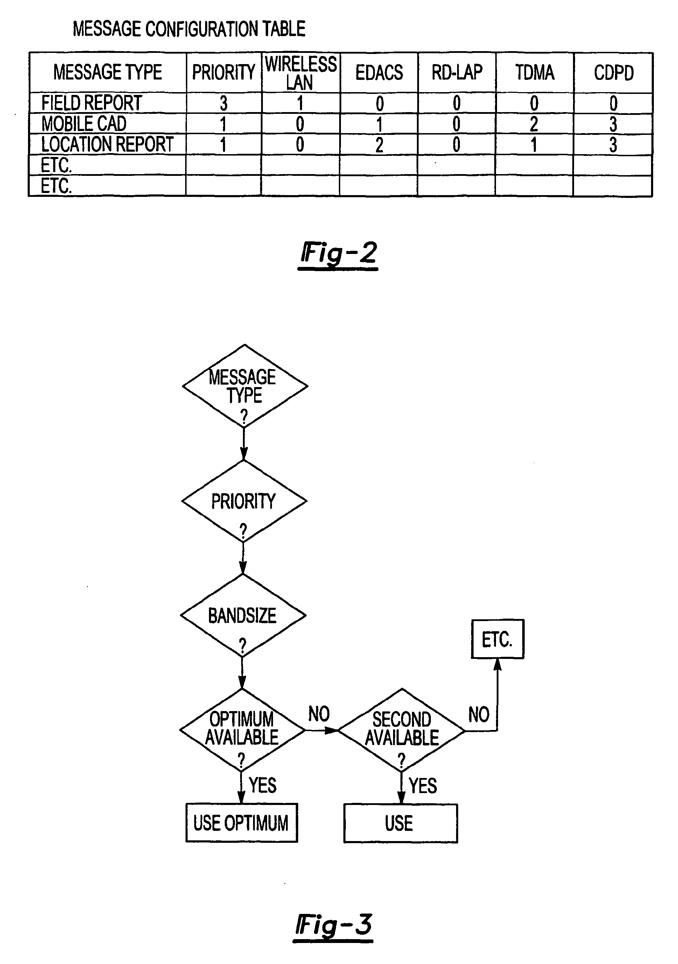

The present invention provides a way of having the server 24, or some other control, evaluate the best communication system to be utilized for a particular type of message. Thus, an operator of the communication system illustrated schematically in Figure 1 is able to program a table such as shown in Figure 2. A number of types of messages are entered into the table and a priority is assigned to each of the messages. As an example, a police officer will periodically make a field report, and will enter it into the computer. However, this would be a relatively routine type of data to send to the base 30. Thus, it is shown with a lower priority. Mobile computer-aided dispatch (CAD) has a higher priority. This would be instructions from the base to the vehicle to proceed to a particular location. Similarly, a location report from the vehicle to the base occurs periodically and has a somewhat high priority. Other types of information such as stopped vehicle information would have an even higher priority. Different types of information could be sent on a stopped vehicle, and some would have longer message sizes and other smaller. As an example, a police officer could request information about a license plate which would be a relatively small message packet. On the other hand, mobile fingerprinting and digitizing technology is becoming more available which will allow a police officer to transmit a fingerprint digitally. Transmitting such a message would require large data size, and may have a different return path that is more optimal.

As shown in the sample table, the mobile field report may only have one available type of transmission mode. The field report would wait until the vehicle 18 came within range of the wireless LAN receiver 40. At that time, the field report would be transmitted. However, none of the other communication systems 28, 30, 32 or 34 would be utilized or tied up with transmission of the field report, if that is the programming that the operator desires.

The mobile CAD would be sent from the base 20 with a high priority. Thus, the wireless LAN would not be a good option for receiving or transmitting this information. On the other hand, the EDACS system which is optimum for message sizes of 100-1000 bytes, would be given the top priority for this type of message. The TDMA type data radio is also optimum for smaller message sizes than one might expect for a mobile CAD communication. Thus, it is listed as the second option for sending and receiving the mobile CAD report. If the EDACS was otherwise not the best choice based upon any number of criteria that could be built into the table, then the TDMA would be utilized. Examples of criteria which could be utilized might be that the priority for the mobile CAD message is high and yet the EDACS would not be available based upon other communication already taking up its bandwidth for some period of time. As an example, if the EDACS was otherwise taken up with transmission of a message and a mobile CAD report came up for transmission, the controller might decide that the priority of the mobile CAD would justify the use of the TDMA communication system. If the control also determines that the TDMA is not immediately available, then CDPD, which might have a higher monetary cost, would be selected. Also, each of the two-way radio types potentially move out of range, and at such time, the CDPD may be the only available option.

Similarly, a location report has a high priority, but would have the reverse flow path of first choice and second choice from the mobile CAD.

The control thus includes a "cost" algorithm, takes into account the monetary cost, the present bandwidth utilization, and the impact of transmitting the particular message on the remaining available bandwidth. As an example of this criteria, if a mobile CAD report was for example relatively large, and the EDACS was not available. The control might determine that the bandwidth which would be taken up by transmission of this message over TDMA would be undesirable, and would then move to the "third" choice CDPD. The operator of the communication system would have to weigh the monetary cost of the CDPD over how the control weights and prioritizes the material to make this choice.

Figure 3 shows a flowchart of the algorithm. A message type comes in for transmission either from the base to the vehicle, or from the vehicle to the base. The priority is determined and the band size of the message is determined. The algorithm then picks the optimum communication system of the several available. The transmission then occurs.

The particular types of communication systems mentioned above are exemplary only. The present invention is directed to a system which evaluates available communication systems on the particular network and selects an appropriate system based upon an operator selected weighting or algorithm.

One particular value of this system is it accommodates new types of communication technology easily. The users of these types of communication systems are often not highly skilled at communication technology or interface. Thus, upgrading to add additional communication technologies has often resulted in complete system replacement. With the above system, all that needs to be done to change a system to allow the use of an additional communication technology is to replace/rewrite the control program.

The base also has a computer 24 which would utilize a similar weighting table to determine which type of communication system to use to send information to the vehicle, somewhat as described above with regard to the mobile CAD information.

### List of the reference numerals

- 18: vehicle
- 20: base
- 22: laptop
- 24: mobile communication server
- 26: transmitter/receiver
- 28: communication system, e.g. an EDACS data radio
- 30: communication system, e.g. an RD-LAP data radio
- 32: communication system, e.g. CDPD modem
- 33: communication system, e.g. a proprietary modem
- 34: communication system, Siemens TDMA Data Radio
- 40: local area network receiver
- 42: computer

### List of the used abbreviations and acronyms

- AVL: automatic vehicle location
- CAD: computer-aided dispatch
- CDPD: Cellular Digital Packet Data, a data transmission technology developed for use on cellular phone frequencies
- EDACS: Enhanced Digital Access Communications System
- GSM: Global System for Mobile communication
- LAN: Local Area Network
- TDMA: Time Division Multiple Access

### List of cited documents

[1] US 6,122,514
   «Communications channel selection»
   Inventors : Charles W. Spaur; et al.
   Assignee : CellPort Systems, Inc., Boulder, Colorado
[2] WO 96/28947 A1
   «Multimode universal mobile telecommunications system»
   Nokia Mobile Phones Ltd., FI - 24101 Salo
[3] US 6,185,413 B1
   «Mobile Station Having a Cost-efficient Call Management Method and System»
   Inventors : Mueller et al.
   Assignee : Siemens Aktiengesellschaft, Munich;
   Siemens Information and Communication Networks, Inc. Boca Raton.

## Claims

1. A control system (24) for a mobile communication system including:
a control (24) operable to receive messages for transmission through any one of several types of communication systems (26, 28, 32, 33, 34), said control being (24) provided with weighting factors to evaluate the particular message and particular available communication systems (26, 28, 32, 33, 34) in order to select a particular communication system (26, 28, 32, 33, 34) based upon the said weighting factors
**characterized in that**,
the weighting factors include a priority to be assigned to the message to be sent and said prioritization is stored in a table of priority information, which table contains a hierarchy of optimum available communication systems for the particular type of message.

2. A control system (24) as set forth in claim 1,
wherein
the weighting factors include a priority to be assigned to the type of message to be sent.

3. A control system (24) as set forth in claim 1 or 2,
wherein
among said weighting factors are the size of the message to be sent.

4. A control system (24) as set forth in one of the claims 1 to 3,
wherein
said control (24) is to be mounted on a mobile vehicle (18), and to receive information from a computer (22) on the mobile vehicle.

## Patentansprüche

1. Steuerungssystem (24) für ein Mobilkommunikationssystem, welches Folgendes umfasst:
ein Steuerungssystem (24), dessen Aufgabe es ist, Nachrichten, die zur Übertragung über eines von mehreren Arten von Kommunikationssystemen (26, 28, 32, 33, 34) vorgesehen sind, zu empfangen, wobei dem besagten Steuerungssystem (24) Gewichtungsfaktoren bereitgestellt werden, um die jeweilige Nachricht und die jeweiligen verfügbaren Kommunikationssysteme (26, 28, 32, 33, 34) zu beurteilen, um ein jeweiliges Kommunikationssystem (26, 28, 32, 33, 34) basierend auf den besagten Gewichtungsfaktoren auszuwählen,
**dadurch gekennzeichnet, dass**
die Gewichtungsfaktoren eine Priorität beinhalten, die der zu übertragenden Nachricht zugewiesen werden soll, und dass die besagte Priorität in einer Tabelle mit Prioritätsinformationen gespeichert wird, welche eine Hierarchie von optimalen verfügbaren Kommunikationssystemen für den jeweiligen Nachrichtentyp enthält.

2. Steuerungssystem (24) gemäß Anspruch 1,
wobei
die Gewichtungsfaktoren eine Priorität beinhalten, die dem zu übertragenden Nachrichtentyp zugewiesen werden soll.

3. Steuerungssystem (24) gemäß Anspruch 1 oder 2,
wobei
zu den besagten Gewichtungsfaktoren die Größe der zu übertragenden Nachricht gehört.

4. Steuerungssystem (24) gemäß einem der Ansprüche 1 bis 3,
wobei
das besagte Steuerungssystem (24) in einem mobilen Fahrzeug (18) installiert werden und Informationen von einem in das mobile Fahrzeug eingebauten Computer (22) empfangen soll.

## Revendications

1. Système (24) de commande d'un système de communication mobile, comprenant :
une commande (24) pouvant fonctionner pour recevoir des messages à transmettre par l'un quelconque de plusieurs types de système (26, 28, 32, 33, 34) de communication, la commande étant (24) munie de facteurs de pondération pour évaluer le message particulier et les systèmes (26, 28, 32, 33, 34) de communication particuliers disponibles afin de choisir un système (26, 28, 32, 33, 34) de communication particulier sur la base des facteurs de pondération,
**caractérisé en ce que**,
les facteurs de pondération comprennent une priorité à affecter au message à envoyer, et le fait de donner une priorité est mémorisé dans une table d'information de priorité, cette table contenant une hiérarchie des systèmes de communication disponibles les meilleurs pour le type particulier de message.

2. Système (24) de commande suivant la revendication 1,
dans lequel
Les facteurs de pondération comprennent une priorité à affecter au message à envoyer.

3. Système (24) de commande suivant la revendication 1 ou 2,
dans lequel
la dimension du message à envoyer figure parmi les facteurs de pondération.

4. Système (24) de commande suivant l'une des revendication 1 à 3,
dans lequel
la commande (24) peut être montée sur un véhicule (18) mobile et recevoir des informations d'un ordinateur (22) sur le véhicule mobile
